**Europäisches Patentamt**

**European Patent Office**

**Office européen des brevets**

(19)

(11) Veröffentlichungsnummer: **0 164 724**

**A2**

(12) # EUROPÄISCHE PATENTANMELDUNG

(21) Anmeldenummer: **85107162.1**

(22) Anmeldetag: **11.06.85**

(51) Int. Cl.⁴: **A 01 B 23/04**
**A 01 B 51/04**

(30) Priorität: **13.06.84 US 620139**

(43) Veröffentlichungstag der Anmeldung:
**18.12.85 Patentblatt 85/51**

(84) Benannte Vertragsstaaten:
**DE FR GB**

(71) Anmelder: **DEERE & COMPANY**
**1 John Deere Road**
**Moline Illinois 61265(US)**

(72) Erfinder: **Klouda, Alvin Edward**
**3507 - 56th Street Ct.**
**Moline Illinois 61265(US)**

(72) Erfinder: **Wolak, David John**
**835 - 37th Street**
**Moline Illinois 61265(US)**

(72) Erfinder: **Bierl, James Franklin**
**4375 Aspen Hills Circle**
**Bettendorf Iowa 52722(US)**

(72) Erfinder: **Riewerts, Paul Reed**
**9320 - 217th Street N.**
**Port Byron Illinois 61275(US)**

(74) Vertreter: **Sartorius, Peter et al,**
**DEERE & COMPANY European Office, Patent**
**Department Postfach 503 Steubenstrasse 36-42**
**D-6800 Mannheim 1(DE)**

(54) **Rahmen für ein Bodenbearbeitungsgerät.**

(57) Ein Bodenbearbeitungsgerät (10) ist mit einer V-förmig ausgebildeten Anhängevorrichtung ausgerüstet, an die von unten her quer verlaufende Arbeitswerkzeuge aufweisende Träger (60) über Halterungen lösbar angeschlossen sind. Hierdurch lassen sich die Träger ohne weiteres gegen andere Träger bzw. Tragelemente mit anders gestalteten Arbeitswerkzeugen oder Düngeeinrichtung in kürzester Zeit auswechseln und somit das Arbeitsgerät umrüsten.

Fig. 1

EP 0 164 724 A2

## Rahmen für ein Bodenbearbeitungsgerät

Die Erfindung bezieht sich auf einen Rahmen für ein Bodenbearbeitungsgerät, der sich auf Laufrädern abstützt und aus mehreren quer verlaufenden, mit Bezug auf die Arbeitsrichtung des Bodenbearbeitungsgerätes mit Abstand zueinander angeordneten Trägern besteht, die zur Aufnahme von Geräteteilen bzw. Bodenbearbeitungswerkzeugen dienen und an eine sich in Arbeitsrichtung erstreckende Anhängevorrichtung schwenkbar angeschlossen sind.

Es ist bereits eine Scheibenegge der eingangs aufgeführten Art bekannt (US-A-4 066 274), die eine aus einem Längsträger bestehende Anhängevorrichtung aufweist, an der seitlich horizontal schwenkbare Querträger angeschlossen sind, die über sich in Fahrtrichtung erstreckende, längenveränderliche Streben miteinander verbunden sind. An den einzelnen quer verlaufenden Trägern sind Scheibeneggen angeordnet. Durch Veränderung der sich in Fahrtrichtung erstreckenden Streben können verschiedene Arbeitspositionen für die Scheibenegge eingestellt werden.

Demgegenüber liegt der Erfindung die Aufgabe zugrunde, den Rahmen bzw. die Anhängevorrichtung mit den zugehörigen quer verlaufenden Trägern derart auszubilden und anzuordnen, daß das Arbeitsgerät durch Auswechseln der einzelnen Arbeitswerkzeuge bzw. Träger in kürzester Zeit umrüstbar ist. Diese Aufgabe ist dadurch gelöst worden, daß die Anhängevorrichtung aus zwei mit Abstand zueinander angeordneten, in Arbeitsrichtung sich erstreckenden, über quer verlaufende Träger miteinander verbundenen Längsträgern gebildet ist, an die die Träger zur Aufnahme der Bodenbearbeitungswerkzeuge lösbar angeschlossen sind, wobei die Längsträger die Träger schneiden und überlappen und an ihren vorderen Enden sich nach vorne erstreckende und nach unten abgewinkelte bzw. abgesetzte Halterungen zur Aufnahme einer Anhängevorrichtung aufweisen. Durch die Verwendung von zwei sich in Arbeitsrichtung erstreckenden Längsträgern, die als Grundrahmen für das Bodenbearbeitungsgerät dienen, und durch
den lösbaren Anschluß der Träger an die Anhängevorrichtung
können die Träger auf einfache Weise in kürzester Zeit ausgewechselt werden, so daß durch den Anbau anders geformter
bzw. ausgebildeter Träger das Arbeitsgerät zu einem neuen
Arbeitsgerät für andere Zwecke umgerüstet werden kann.
Hierdurch können die Lagerkosten insgesamt vermieden werden, da lediglich ein Grundrahmen und verschieden ausgebildete Träger zur Aufnahme von Arbeitswerkzeugen bzw. Geräteteilen zu unterschiedlichen Geräten ausgebaut werden
können. Dadurch lassen sich die Stückzahlen des Grundrahmens und auch der Querträger klein halten.

In weiterer Ausgestaltung der Erfindung ist es vorteilhaft,
daß die Längsträger der Anhängevorrichtung über Halterungen
mit den Trägern zur Aufnahme der Bodenbearbeitungswerkzeuge
lösbar verbunden sind und daß die Halterungen als Winkelhalterungen oder U-förmig ausgebildete Halterungen ausgebildet
sind, die zwischen ihren Schenkeln die Träger aufnehmen und
die über Schraubenbolzen an die Rahmenträger bzw. an an den
Rahmenträgern vorgesehene Schenkel lösbar angeschlossen
sind. Durch die Verwendung von Halterungen, die beispielsweise als Winkelhalterungen oder als U-förmige Halterungen
ausgebildet sein können, ist der An- und Abbau der an die
Längsträger angeschlossenen Träger zur Aufnahme der Arbeitswerkzeuge in kürzester Zeit ohne weiteres durchzuführen.
Dabei ist es vorteilhaft, daß an den Längsträgern seitlich
herausstehende Tragelemente starr angeordnet sind und in
Richtung der quer verlaufenden Träger zur Aufnahme der Bodenbearbeitungsgeräte zeigen, wobei die Tragelemente zumindest einen Teil der Träger überlappen. Durch die seitlich
herausstehenden, an den Längsträgern angeordneten Tragelemente wird die Stabilität des Rahmens des Bodenbearbeitungsgerätes auf einfache Weise verbessert, da zur Aufnahme der
quer verlaufenden Träger eine große Anlagefläche gebildet
werden kann, an die die Träger anschraubbar sind. In vorteilhafter Weise sind an den quer verlaufenden Trägern vertikal verschwenkbare, ebenfalls quer verlaufende Träger angeschlossen, die über sich in Fahrtrichtung erstreckende Rahmenträger miteinander verbunden sind. Hierdurch läßt sich die Arbeitsbreite des Bodenbearbeitungsgerätes auf einfache Weise vergrößern, da zur Erweiterung des Arbeitsgerätes lediglich an die quer verlaufenden Träger weitere quer verlaufende Träger schwenkbar anschließbar sind, die lediglich über die in Fahrtrichtung verlaufenden Rahmenträger verbunden werden müssen.

In weiterer Ausgestaltung der Erfindung ist es vorteilhaft, daß die Anhängevorrichtung aus zwei V-förmig zusammenlaufenden Längsträgern gebildet ist und nach unten abgewinkelte Halterungen aufweist, an deren vorderen Enden die Anhängevorrichtung über zwei Kugelgelenke schwenkbar angeschlossen ist, die auf je einem horizontal verlaufenden, in den Schenkeln der Halterungen gelagerten Bolzen drehbar aufgenommen sind. Die Verwendung eines Kugelgelenkes zum Anschluß der Anhängevorrichtung an die V-förmig zusammenlaufenden Längsträger gestattet es, daß der Winkel zwischen den beiden Längsträgern verändert werden kann, ohne daß hierzu eine neue Anhängevorrichtung notwendig wird. Hierdurch läßt sich auch die Arbeitsstellung der Arbeitswerkzeuge auf einfache Weise beeinflussen. Dabei ist es vorteilhaft, daß die Anhängevorrichtung und die Anhängestrebe zu der Anhängeöse am vorderen Ende der Anhängestrebe V-förmig zusammenlaufen. Um das Arbeitsgerät für Transportfahrt umzurüsten, ist es vorteilhaft, daß die Längsträger sowie die nach unten abgewinkelten Halterungen aus einem einteiligen, gebogenen Rohr gebildet sind und daß die an die Rahmenträger angeschlossenen Laufräder mit den Rahmenträgern gemeinsam verschwenkbar sind. Dabei ist es ferner vorteilhaft, daß der Anbau der V-förmig zueinander verlaufenden Längsträger der Anhängevorrichtung von oben her an die quer verlaufenden Träger zur Aufnahme der Arbeitsgeräte bzw. der Bodenbearbeitungswerkzeuge somit erleichtert wird, da es wesentlich einfacher ist, die vom Gewicht geringere Anhängevorrichtung auf die quer verlaufenden Träger aufzusetzen. Außerdem lassen sich die längs verlaufenden Träger, die mittels der Kugelgelenke seitenbeweglich angeordnet sind, den quer verlaufenden Trägern ohne weiteres anpassen. Hierzu ist es vorteilhaft, daß die zwischen den längs verlaufenden Trägern vorgesehenen Streben längenveränderlich ausgebildet sind. Ferner ist es vorteilhaft, daß an den Längsträgern seitlich herausstehende Schenkel starr angeordnet sind, die zur Aufnahme von Schraubenbolzen Öffnungen aufweisen, die mit in den beiderseits der quer verlaufenden Träger angeordneten Winkelhalterungen vorgesehenen Bohrungen korrespondieren, so daß die Träger von unten her an die Längsträger lösbar anschließbar sind.

Im folgenden wird die Erfindung anhand von zwei Ausführungswege darstellenden Zeichnungen näher erläutert. Es zeigt:

Fig. 1     eine perspektivische Darstellung einer Scheibenegge leichter Bauweise,

Fig. 2     ein weiteres Ausführungsbeispiel, ähnlich wie in Fig. 1, jedoch einer mittelschweren Bauweise,

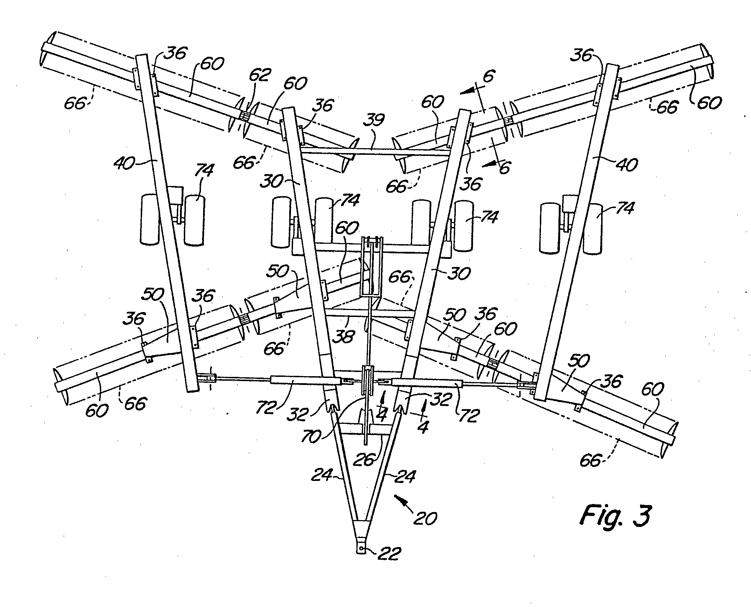

Fig. 3     eine Draufsicht des Rahmens mittelschwerer Bauweise für eine Scheibenegge gemäß Fig. 2,

Fig. 4     einen Schnitt entlang der Linie 4 - 4 gemäß Fig. 3 im größeren Maßstab, wobei die Gelenkverbindung näher veranschaulicht ist,

Fig. 5     eine perspektivische Darstellung des Arbeitsgerätes in Transportstellung,

Fig. 6     einen Schnitt entlang der Linie 6 - 6 gemäß Fig. 3.

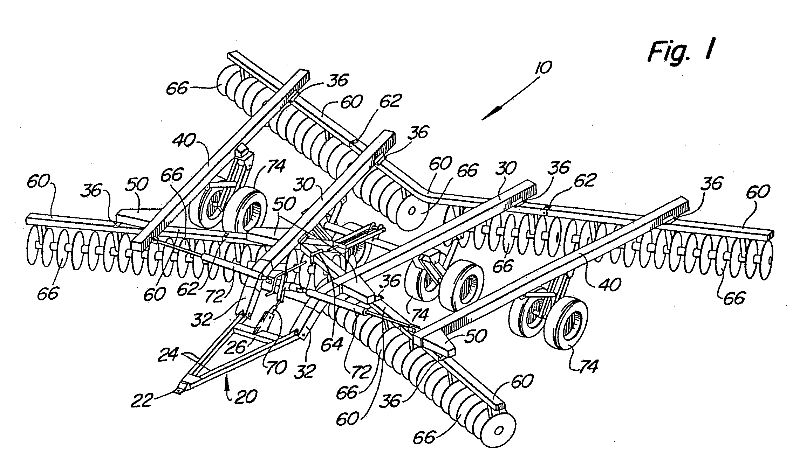

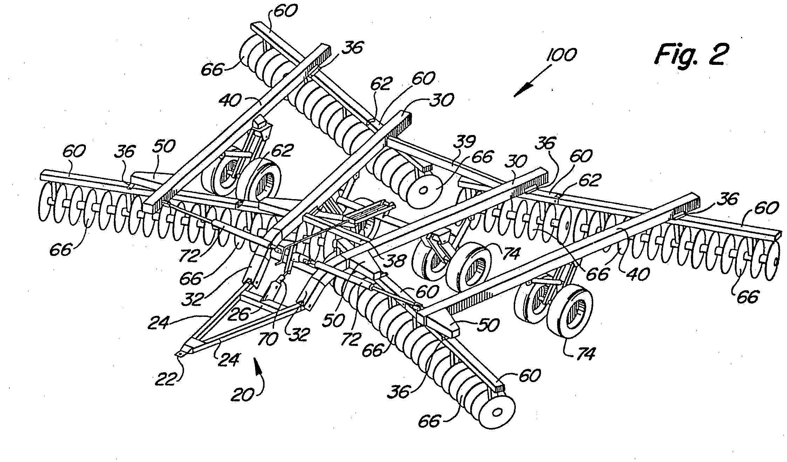

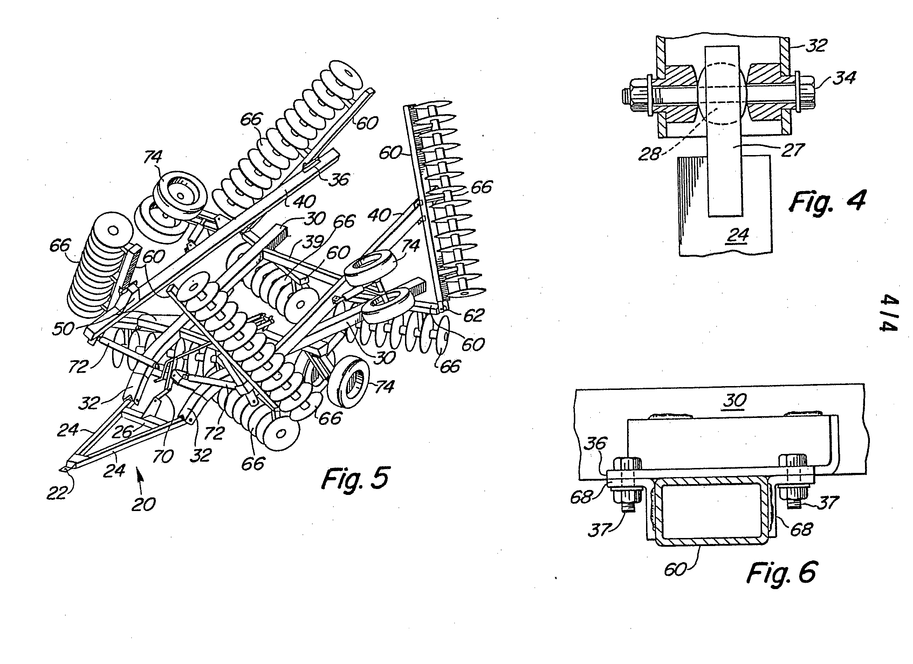

In Fig. 1 ist mit 10 eine Scheibenegge leichter Bauweise bezeichnet, während in Fig. 2 eine Scheibenegge 100 mittelschwerer bis schwerer Bauweise dargestellt ist. Beide weisen im Prinzip den gleichen erfindungsgemäßen Rahmen auf. Die Scheibenegge 10 ist mit einer Anhängevorrichtung 20 ausgerüstet, die an zwei sich in Fahrtrichtung erstreckende Längsträger 30 vertikal schwenkbar angeschlossen ist. An den Rahmenträgern 40 befinden sich seitlich herausstehende Tragelemente 50, die mit den Trägern 60 zur Aufnahme der Scheibeneggen 66 dienen. Die einzelnen Träger 60 können unterschiedlich lang sein und verschiedene Formgebungen aufweisen. Sie sind jedoch im Ausführungsbeispiel vorzugsweise parallel und mit Abstand zu den Längsträgern 30 angeordnet (siehe Fig. 1 und 2). Die Träger 60 können starr angeordnet sein oder mit einer Gelenkverbindung 62 ausgestattet sein, um somit die an die Längsträger 30 angeschlossenen Träger 60 von einer Arbeitsstellung gemäß Fig. 1 in eine Transportstellung gemäß Fig. 5 zu verschwenken. Ferner ist es möglich, daß die innenliegenden bzw. sich gegenüberliegenden Enden der Rahmenteile 60 mittels Halterungen 64 starr verbunden sind, während die äußeren Teile der Rahmenteile über die Gelenkverbindung verschwenkbar sind. An den einzelnen Rahmenteilen 60 sind Bodenbearbeitungswerkzeuge, beispielsweise Scheibeneggen 66, angeschlossen. Anstelle der in den Figuren 1 und 2 dargestellten Scheibeneggen 66 können auch Zinken oder Scharkörper mit den Rahmenteilen 60 verbunden werden.

Die Anhängevorrichtung 20 weist eine vordere Anhängeöse 22 auf, die an ein in der Zeichnung nicht dargestelltes Zugfahrzeug anschließbar ist. Die Anhängevorrichtung 20 ist aus zwei nach vorne V-förmig zusammenlaufenden Anhängestreben 24 gebildet, die an ihren vorderen Enden über die Anhängeöse 22 miteinander verbunden sind. Die hinteren mit Abstand zueinander angeordneten Enden der Anhängestreben 24 sind an zwei Halterungen 32 angeschlossen, die wiederum mit den Längsträgern 30 fest verbunden sind. Die an die Halterung 32 vertikal schwenkbar angeschlossene Anhängevorrichtung 20 weist, wie insbesondere aus Fig. 4 hervorgeht, zwei Gelenkverbindungen 27 auf, die zur Verbindung des hinteren Endes der Anhängestrebe 24 an das entsprechende vordere Ende der Halterung 32 dienen. Die Gelenkverbindung 27 besteht aus einer Lasche mit einem Kugelgelenk 28. Das Kugelgelenk 28 ist in der mit der Anhängestrebe starr verbundenen Lasche allseitig drehbar aufgenommen.

Die ebenfalls V-förmig nach vorne zusammenlaufenden Längsträger 30 mit ihren sich nach unten erstreckenden Halterungen 32 nehmen in ihren Schenkeln das Kugelgelenk 28 mittels eines Schraubenbolzens 34 auf. Die einzelnen Längsträger 30 mit den zugehörigen Halterungen sind als Rohrträger ausgebildet und liegen auf der gleichen Längsmittelebene wie die einzelnen Anhängestreben 24, so daß die von der Anhängestrebe 24 ausgehende Zugkraftlinie ebenfalls auf der gleichen Ebene verläuft wie die Zugkraftlinie der Längsträger 30. Ein jeder Längsträger 30 ist so angeordnet, daß er den Träger bzw. Rahmenteil 60 schneidet und überlappt und ferner mit diesem lösbar verbunden ist (siehe Fig. 6). Hierzu sind zwei Winkelhalterungen 68 fest mit dem Träger 60 verbunden, wobei die vertikal verlaufenden Schenkel der Winkelhalterung 68 an die vertikal verlaufenden Seitenwände des Trägers 60 angeschlossen, beispielsweise angeschweißt, sind und die horizontal verlaufenden Schenkel 36 über Schraubenbolzen 37 an einen Schenkel der Tragelemente 50 lösbar angeschlossen sind. Wie aus Fig. 2 hervorgeht, weisen die Träger 60 mit Bezug auf die Längsrichtung des Arbeitsgerätes einen Abstand auf, die über die Längsträger 30 miteinander verbunden sind, die an ihren vorderen und hinteren Enden über quer verlaufende Träger 38 und 39 miteinander verbunden sind, so daß ein starrer Grundrahmen geschaffen wird.

Die verschwenkbaren Rahmenträger 40 verlaufen in etwa parallel zu den Längsträgern 30 und sind mit Abstand dazu angeordnet, so daß eine relativ große Arbeitsbreite für die Scheibenegge 100 geschaffen wird. Die Rahmenträger 40 sind ebenfalls so angeordnet, daß sie die Träger 60 schneiden und überlappen und auf ähnliche Weise wie die Träger 30 gemäß Fig. 6 an die Träger 60 lösbar angeschlossen sind.

Die Tragelemente 50 zur Aufnahme der Winkelhalterung 68 sind mit den Längsträgern 30 starr verbunden, erstrecken sich von diesen nach außen und dienen zur schwenkbaren Aufnahme der Rahmenträger 40. Die Tragelemente 50 überlappen dabei einen Teil des quer verlaufenden Trägers 60. Das freie äußere Ende des Tragelementes 50 ist mit dem Träger 60 lösbar verbunden. Die Tragelemente 50 sind so ausgelegt, daß sie Torsionskräften, die von den Längsträgern 30 und den Rahmenträgern 40 ausgehen, widerstehen können.

Obwohl die Scheibenegge gemäß Fig. 1 und 2 mit mehreren in Gruppen angeordneten Scheiben ausgerüstet ist und die Rahmenträger 40 mittels Hydraulikzylindern 72 vertikal verschwenkbar und auf Laufrädern 74 auf dem Boden abstützbar sind, kann der in den Figuren 1 und 2 dargestellte Rahmen des Bodenbearbeitungsgerätes auch mit anders ausgebildeten Bodenbearbeitungswerkzeugen bzw. Arbeitsgeräten ausgerüstet werden.

Patentansprüche

1. Rahmen für ein Bodenbearbeitungsgerät, der sich auf Laufrädern (74) abstützt und aus mehreren quer verlaufenden, mit Bezug auf die Arbeitsrichtung des Bodenbearbeitungsgerätes mit Abstand zueinander angeordneten Trägern (60) besteht, die zur Aufnahme von Geräteteilen bzw. Bodenbearbeitungswerkzeugen dienen und an eine sich in Arbeitsrichtung erstreckende Anhängevorrichtung schwenkbar angeschlossen sind, dadurch gekennzeichnet, daß die Anhängevorrichtung aus zwei mit Abstand zueinander angeordneten, in Arbeitsrichtung sich erstreckenden, über quer verlaufende Träger (26, 38, 39) miteinander verbundenen Längsträgern (30) gebildet ist, an die die Träger (60) zur Aufnahme der Bodenbearbeitungswerkzeuge lösbar angeschlossen sind, wobei die Längsträger (30) die Träger (60) schneiden und überlappen und an ihren vorderen Enden sich nach vorne erstreckende und nach unten abgewinkelte bzw. abgesetzte Halterungen (32) zur Aufnahme einer Anhängevorrichtung (20) aufweisen.

2. Rahmen nach Anspruch 1, dadurch gekennzeichnet, daß die Längsträger (30) der Anhängevorrichtung über Halterungen (68) mit den Trägern (60) zur Aufnahme der Bodenbearbeitungswerkzeuge lösbar verbunden sind.

3. Rahmen nach Anspruch 2, dadurch gekennzeichnet, daß die Halterungen (68) als Winkelhalterungen oder U-förmig ausgebildete Halterungen ausgebildet sind, die zwischen ihren Schenkeln die Träger (60) aufnehmen und die über Schraubenbolzen (37) an die Rahmenträger (40) bzw. an an den Rahmenträgern vorgesehene Schenkel (36) lösbar angeschlossen sind.

4. Rahmen nach einem oder mehreren der vorherigen Ansprüche, dadurch gekennzeichnet, daß an den Längsträgern (30) seitlich herausstehende Tragelemente (50) starr angeordnet sind und in Richtung der quer verlaufenden Träger (60) zur Aufnahme der Bodenbearbeitungsgeräte zeigen, wobei die Tragelemente zumindest einen Teil der Träger (60) überlappen.

5. Rahmen nach einem oder mehreren der vorherigen Ansprüche, dadurch gekennzeichnet, daß an den quer verlaufenden Trägern (60) vertikal verschwenkbare, ebenfalls quer verlaufende Träger angeschlossen sind, die über sich in Fahrtrichtung erstreckende Rahmenträger (40) miteinander verbunden sind.

6. Rahmen nach einem oder mehreren der vorherigen Ansprüche, dadurch gekennzeichnet, daß die Anhängevorrichtung (20) aus zwei V-förmig zusammenlaufenden Längsträgern (30) gebildet ist und nach unten abgewinkelte Halterungen (32) aufweist, an deren vorderen Enden die Anhängevorrichtung über zwei Kugelgelenke (28) schwenkbar angeschlossen ist, die auf je einem horizontal verlaufenden, in den Schenkeln der Halterungen (32) gelagerten Bolzen (34) drehbar aufgenommen sind.

7. Rahmen nach einem oder mehreren der vorherigen Ansprüche, dadurch gekennzeichnet, daß die Anhängevorrichtung (20) und die Anhängestrebe (24) zu der Anhängeöse (22) am vorderen Ende der Anhängestrebe V-förmig zusammenlaufen.

8. Rahmen nach einem oder mehreren der vorherigen Ansprüche, dadurch gekennzeichnet, daß die Längsträger (30) sowie die nach unten abgewinkelten Halterungen (32) aus einem einteiligen, gebogenen Rohr gebildet sind.

9. Rahmen nach einem oder mehreren der vorherigen Ansprüche, dadurch gekennzeichnet, daß die an die Rahmenträger (40) angeschlossenen Laufräder (74) mit den Rahmenträgern gemeinsam verschwenkbar sind.

10. Rahmen nach einem oder mehreren der vorherigen Ansprüche, dadurch gekennzeichnet, daß an den Längsträgern (30) seitlich herausstehende Schenkel (36) starr angeordnet sind, die zur Aufnahme von Schraubenbolzen (37) Öffnungen aufweisen, die mit in den beiderseits der quer verlaufenden Träger (60) angeordneten Winkelhalterungen (68) vorgesehenen Bohrungen korrespondieren, so daß die Träger (60) von unten her an die Längsträger (30) lösbar anschließbar sind.

Fig. 1

1/4

Fig. 2

0164724

Fig. 3

Fig. 4

Fig. 5

Fig. 6